Europäisches Patentamt

European Patent Office

Office européen des brevets

(19)

(11) ·Veröffentlichungsnummer: **0 133 637**

**B1**

(12) **EUROPÄISCHE PATENTSCHRIFT**

(45) Veröffentlichungstag der Patentschrift:
12.07.89

(21) Anmeldenummer: **84106452.0**

(22) Anmeldetag: **22.04.81**

(51) Int. Cl.⁴: **A 01 B 59/048,** A 01 B 63/108, B 62 D 49/06

(54) **Frontseitige Geräteanbauvorrichtung für ein frontverkleidetes land- und/oder bauwirtschaftlich nutzbares Kraftfahrzeug, insbesondere Ackerschlepper.**

(43) Veröffentlichungstag der Anmeldung:
06.03.85 Patentblatt 85/10

(45) Bekanntmachung des Hinweises auf die Patenterteilung:
12.07.89 Patentblatt 89/28

(84) Benannte Vertragsstaaten:
AT DE FR GB IT SE

(56) Entgegenhaltungen:
DE-C-919 438
FR-A-2 380 934
US-A-4 161 991
US-A-4 183 286

(73) Patentinhaber: DEERE & COMPANY, 1 John Deere Road, Moline Illinois 61265 (US)

(72) Erfinder: Weiss, Heinz, Dipl.- Ing., Volkerstrasse 24, D-6140 Bensheim (DE)

(74) Vertreter: Feldmann, Bernhard, DEERE & COMPANY European Office, Patent Department Steubenstrasse 36- 42 Postfach 503, D-6800 Mannheim 1 (DE)

EP 0 133 637 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

## Beschreibung

Die Erfindung bezieht sich auf ein Land- und/oder bauwirtschaftlich nutzbares Kraftfahrzeug, insbesondere Ackerschlepper, mit einer frontseitigen Geräteanbauvorrichtung, die zwei untere Lenker und mindestens einen oberen Lenker aufweist, die über eine Stellvorrichtung vertikal verschwenkbar und deren fahrzeugseitige Enden auf Querachsen gelagert sind, wobei die Querachsen, um die die unteren Lenker schwenkbar sind, im Bereich der Vorderachse des Kraftfahrzeuges vorgesehen sind und das Kraftfahrzeug einen Fahrzeugrahmen aufweisen kann.

Bei einer bekannten Geräteanbauvorrichtung (DE-A1-2 758 978) sind die Querachsen, um die die Lenker vertikal verschwenkbar sind, vor der Frontverkleidung angeordnet, so daß die Angriffspunkte der Lenker weit vor der Vorderachse liegen, wodurch sich bei angebauten Frontgeräten ungünstige Hebelarme ergeben, die zu zusätzlichen Belastungen führen. Hinzu kommt, daß die Angriffspunkte der Lenker und die gesamte Stellvorrichtung ungeschützt angeordnet und damit den Witterungs- und Umwelteinflüssen ausgesetzt sind. Ein weiterer Nachteil ist darin zu sehen, daß bei abgebautem Frontgerät und nicht abgebauten Lenkern deren weit nach vorne ragende Teile als verkehrsgefährdende Fahrzeugteile betrachtet werden, die je nach Gesetzgebung besonders kenntlich gemacht werden müssen.

Bei der Geräteanbauvorrichtung (US-A-4 161 991), von der die Erfindung ausgeht, sind die fahrzeugseitigen Anlenkpunkte der unteren Lenker und die fahrzeugseitige Anschlußstelle des oberen Lenkers weiter zurückverlegt worden, jedoch nach wie vor ungeschützt und damit den Witterungseinflüssen ausgesetzt.

Die mit der Erfindung zu lösende Aufgabe wird darin gesehen, die fahrzeugseitigen Anschlußstellen des oberen und der unteren Lenker vorteilhafter anzuordnen. Diese Aufgabe ist gemäß der Erfindung dadurch gelöst worden, daß die Querachsen, um die die unteren Lenker schwenkbar sind, und die Querachse, um die der oder die oberen Lenker schwenken können, an einem am Vorderachsbock oder Fahrzeugrahmen fest angeordneten Hubrahmen angebracht sind, der mit der Stellvorrichtung und mit den Querachsen unter der Frontverkleidung vorgesehen ist.

Auf diese Weise sind wesentliche Teile der Geräteanbauvorrichtung innerhalb der Fahrzeugverkleidung angeordnet, wodurch diese einmal gegen Verschmutzung besser geschützt sind und sich zum anderen eine verbesserte Optik ergibt.

Hinzu kommt, daß nur die Lenker über die Frontseite der Frontverkleidung hinaus stehen, so daß eine Verkehrsgefährdung durch herausragende Fahrzeugteile verringert ist und ganz vermieden werden kann, wenn bei nicht im Einsatz befindlicher Geräteanbauvorrichtung die Lenker abgebaut werden.

Für ein Kraftfahrzeug mit einem Hubrahmen, der wenigstens einem die fahrzeugseitigen Enden der unteren und des oberen Lenkers aufnehmenden Träger aufweist, wird ferner vorgeschlagen, daß der oder die Träger innerhalb der Frontverkleidung vorgesehen sind. Zweckmäßig ist hierzu, daß für jeden der unteren Lenker ein gesonderter Träger vorgesehen ist, von denen mindestens einer einen Anschlag aufweist, gegen den mindestens einer der Lenker in seiner maximalen Schwenkstellung zur Anlage bringbar ist.

Besonders günstige Hebelarme lassen sich dadurch erreichen, daß die Querachsen der Lenker an an den Trägern befestigten, nach hinten zu einer Fahrerkabine weisenden Laschen angeordnet sind.

Für ein Kraftfahrzeug mit einer als wenigstens ein Hubzylinder ausgebildeten Stellvorrichtung, wobei der Hubzylinder einenends am Fahrzeugrahmen bzw. am Vorderachsbock angeordnet ist, können der oder die Hubzylinder anderenends an dem oder den oberen Lenkern angreifen.

Ferner wird nach der Erfindung noch vorgeschlagen, daß die rahmenseitige Anschlußstelle des oder der Hubzylinder eine Vertikalschwenkung des- bzw. derselben zuläßt und der lenkerseitige Anschluß eine drehbar in der Stellvorrichtung bzw. in dem oder den Lenkern gelagerte Querstange aufweist, wobei die Querachsen der Lenker mit Bezug auf einen Geräteanschlußteil hinter der Querstange gegebenenfalls bis in eine Vertikalebene über der Vorderachse angeordnet sind.

Im einzelnen können bei zwei oberen Lenkern diese in derselben Vertikalebene wie die zugehörigen unteren Lenker angeordnet und jeweils durch Schlitze in der Frontverkleidung geführt sein.

Eine gute Stabilisierung wird dann erreicht, wenn bei zwei oberen Lenkern die Querstange der Stellvorrichtung die beiden oberen Lenker miteinander verbindet und in diesen drehbar gelagert ist.

Was die konstruktive Ausbildung im einzelnen anbelangt, so können die den Hubrahmen bildenden Träger im Querschnitt U-profilförmig ausgebildet sein, deren offene Seiten einander zugekehrt sind, jeweils eine Stellvorrichtung in sich aufnehmen und an ihren mit Bezug auf die Stellvorrichtung rückwärtigen Schenkeln die sich nach rückwärts erstreckenden Laschen zur Aufnahme der Querachsen der Lenker aufweisen.

In der Zeichnung ist ein nachfolgend näher erläutertes Ausführungsbeispiel der Erfindung dargestellt. Es zeigt:

Fig. 1 eine Geräteanbauvorrichtung in Arbeitsstellung,

Fig. 2 die Geräteanbauvorrichtung nach Fig. 1 im abgesenkten Zustand und

Fig. 3 die Geräteanbauvorrichtung nach Fig. 1 im angehobenen Zustand.

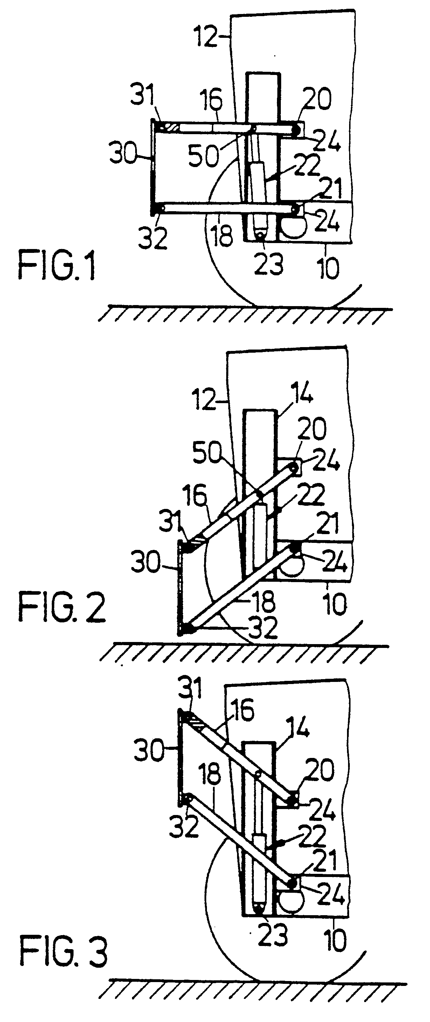

In den Figuren ist ein Fahrzeugrahmen mit 10, in dem eine nicht näher bezeichnete Vorderachse aufgehängt ist, eine Front- bzw. Motorverkleidung mit 12 und zwei Träger mit 14 bezeichnet, von denen in der Zeichnung nur einer ersichtlich ist, die im Querschnitt U-profilförmig ausgebildet sind und eine Stellvorrichtung 22 aufnehmen können, die bevorzugt als ein oder mehrere Hubzylinder ausgebildet ist. Für die Ausführungsform gemäß Figuren 1 bis 3 genügt ein einstufiger Hubzylinder. Anstelle eines hydraulischen Hubzylinders sind auch andere Einrichtungen denkbar, wie z. B. Schneckenwelle und Zahnstange. Bevorzugt werden jedoch zumeist Hydraulikzylinder.

Die Träger 14 sind fest mit dem Fahrzeugrahmen 10 verbunden, insbesondere verschweißt. Jeder Hubzylinder ist mit seiner unteren Anschlußstelle 23 z. B. am Fahrzeugrahmen 10 schwenkbeweglich befestigt und mit dem oberen Ende drehbeweglich mit einem rechten bzw. einem linken oberen Lenker 16 verbunden. Da beim Verschwenken der Lenker die Stellvorrichtung 22 ebenfalls eine geringe Verschwenkung vollzieht, empfiehlt es sich, bei Verwendung von Hydraulikzylindern diese so einzubauen, daß die weniger Raum beanspruchenden Kolbenstangen nach oben weisen und mit den oberen Lenkern 16 verbunden sind. Die oberen und unteren Lenker 16, 18 sind schwenkbeweglich an an den Trägern 14 befestigten, nach hinten zur Fahrerkabine weisenden Laschen 24 oder dergleichen angeschlossen. Die Laschen 24 können am offenen Ende des jeweils fahrerkabinenseitigen Profilschenkels der Träger 14 angeschweißt werden. Es wird eine Anordnung bevorzugt, bei der die beiden U-Profile zueinander weisen und die oberen und unteren Lenker 16, 18 zwischen den Trägern 14 zu liegen kommen. Dabei ist die linke und rechte Stellvorrichtung 22 an ihrem oberen Ende durch eine waagerecht verlaufende Querstange 50 verbunden, auf der sich die beiden oberen Lenker 16 drehbeweglich abstützen. Aus den Seitenansichten wird der Abstand ersichtlich, in dem sich die obere und untere Lasche 24 für den jeweiligen oberen und unteren Lenker 16 und 18 befindet. Die unteren Lenker 18 sind bei der gezeigten Ausführungsform nicht mit der Stellvorrichtung 22 verbunden, sondern werden parallel mit den oberen Lenkern 16 durch ein Gehäuseanschlußteil 30 mitgenommen. Letzteres ist an Schwenkpunkten 31 und 32 mit den oberen und unteren Lenkern 16, 18 verbunden. Die oberen Lenker 16 können auch vorne mittig in einen einzigen Drehpunkt zusammenlaufen.

Die Figuren 1 bis 3 unterscheiden sich lediglich in der gezeigten Position der Lenker 16, 18. Wie aus Figur 3 ersichtlich, reicht die obere Stellung in der Regel für Geräte mit größerer Bauhöhe nicht aus, um die Abladung auf einer üblichen Ladepritsche sicherzustellen, große Traktoren ausgenommen. Eine Verbesserung kann hier dadurch erreicht werden, daß die Höhe der Träger 14 bis nahe an die obere Begrenzung der Frontverkleidung 12 vergrößert wird.

Es ist noch darauf hinzuweisen, daß sich die wesentlichen Teile der Geräteanbauvorrichtung einschließlich Stellvorrichtung 22 und Träger 14 innerhalb der Fahrzeugverkleidung 12 befinden und daß die oberen und unteren Lenker 16, 18 durch Schlitze in der Frontseite der Fahrzeugverkleidung 12 nach außen hindurchgeführt sind.

Die erfindungsgemäße Anordnung läßt sich ohne größeren Aufwand gegenüber herkömmlichen Vorrichtungen robust, langlebig und zuverlässig bedienbar gestalten.

Anzumerken ist schließlich noch, daß die oberen und unteren Lenker 16, 18 und die Hubzylinder der Stellvorrichtung 22 mit Schnellverschlüssen an ihren Querachsen 20, 21 bzw. ihren Anschlußstellen 23 angelenkt sind, so daß die außen liegenden Teile der Geräteanbauvorrichtung leicht abgebaut werden können, falls sie nicht benötigt werden. Andersartige landwirtschaftliche Arbeiten werden durch die Geräteanbauvorrichtung somit nicht beeinträchtigt.

## Patentansprüche

1. Land- und/oder bauwirtschaftlich nutzbares Kraftfahrzeug, insbesondere Ackerschlepper, mit einer frontseitigen Geräteanbauvorrichtung, die zwei untere Lenker (18) und mindestens einen oberen Lenker (16) aufweist, die über eine Stellvorrichtung (22) vertikal verschwenkbar und deren fahrzeugseitige Enden auf Querachsen (20, 21) gelagert sind, wobei die Querachsen (21), um die die unteren Lenker (18) schwenkbar sind, im Bereich der Vorderachse des Kraftfahrzeuges vorgesehen sind und das Kraftfahrzeug einen Fahrzeugrahmen aufweisen kann, dadurch gekennzeichnet, daß die Querachsen (21), um die die unteren Lenker (18) schwenkbar sind, und die Querachse (20), um die der oder die oberen Lenker (16) schwenken können, an einem am Vorderachsbock oder Fahrzeugrahmen (10) fest angeordneten Hubrahmen angebracht sind, der mit der Stellvorrichtung (22) und mit den Querachsen (20, 21) unter der Frontverkleidung (12) vorgesehen ist.

2. Kraftfahrzeug nach Anspruch 1 dadurch gekennzeichnet daß, der Hubrahmen wenigstens einen die fahrzeugseitigen Enden der unteren und des oberen Lenkers (16 und, 18) aufnehmenden Träger (14) aufweist, und daß der oder die Träger (14) innerhalb der Frontverkleidung (12) vorgesehen sind.

3. Kraftfahrzeug nach Anspruch 2, dadurch gekennzeichnet, daß für jeden der unteren Lenker (18) ein gesonderter Träger (14) vorgesehen ist, von denen mindestens einer einen Anschlag aufweist, gegen den mindestens einer der Lenker (16, 18) in seiner maximalen Schwenkstellung zur Anlage bringbar ist.

4. Kraftfahrzeug nach einem oder mehreren der vorherigen Ansprüche, dadurch gekennzeichnet, daß die Querachsen (20, 21) der Lenker (16, 18) an an den Trägern (14) befestigten, nach hinten zu einer Fahrerkabine weisenden Laschen (24) angeordnet sind.

5. Kraftfahrzeug nach einem oder meheren der vorherigen Ansprüche, dadurch gekennzeichnet, daß das Kraftfahrzeug mit einer als wenigstens ein Hubzylinder ausgebildeten Stellvorrichtung (22) versehen ist, wobei der Hubzylinder einenends am Fahrzeugrahmen (10) bzw. am Vorderachsbock angeordnet ist, und der oder die Hubzylinder (Stellvorrichtung 22) anderenends an dem oder den oberen Lenkern (16) angreifen.

6. Kraftfahrzeug nach einem oder mehreren der vorherigen Ansprüche, dadurch gekennzeichnet, daß die rahmenseitige Anschlußstelle (23) des oder der Hubzylinder (Stellvorrichtung 22) eine Vertikalschwenkung des- bzw. derselben zuläßt und der lenkerseitige Anschluß eine drehbar in der Stellvorrichtung (22) bzw. in dem oder den Lenkern (16, 18) gelagerte Querstange (50) aufweist, wobei die Querachsen (20, 21) der Lenker (16, 18) mit Bezug auf einen Geräteanschlußteil (30) hinter der Querstange (50) gegebenenfalls bis in eine Vertikalebene über der Vorderachse angeordnet sind.

7. Kraftfahrzeug nach einem oder mehreren der vorherigen Ansprüche, dadurch gekennzeichnet, daß bei zwei oberen Lenkern (16) diese in derselben Vertikalebene wie die zugehörigen unteren Lenker (18) angeordnet und jeweils durch Schlitze in der Frontverkleidung (12) geführt sind.

8. Kraftfahrzeug nach einem oder mehreren der vorherigen Ansprüche, dadurch gekennzeichnet, daß bei zwei oberen Lenkern (16) die Querstange (50) der Stellvorrichtung (22) die beiden oberen Lenker (16) miteinander verbindet und in diesen drehbar gelagert ist.

9. Kraftfahrzeug nach einem oder mehreren der vorherigen Ansprüche, dadurch gekennzeichnet, daß die den Hubrahmen bildenden Träger (14) im Querschnitt U-profilförmig ausgebildet sind, deren offene Seiten einander zugekehrt sind, jeweils eine Stellvorrichtung (22) in sich aufnehmen und an ihren mit Bezug auf die Stellvorrichtung rückwärtigen Schenkeln die sich nach rückwärts erstreckenden Laschen (24) zur Aufnahme der Querachsen (20, 21) der Lenker (16, 18) aufweisen.

## Claims

1. A motor vehicle which can be used in agriculture and/or the building industry, in particular an agricultural tractor, having a front implement mounting device which has two lower links (18) and at least one upper link (16) which are vertically pivotable by way of a control device (22), the ends of the links which are towards the vehicle being mounted on transverse shafts (20, 21), wherein the transverse shafts (21) about which the lower links (18) are pivotable are provided in the region of the front axle of the motor vehicle and the motor vehicle can have a vehicle frame characterised in that the transverse shafts (21) about which the lower links (18) are pivotable and the transverse shaft (20) about which the upper link or links (16) can pivot are mounted on a lift frame which is fixedly arranged on the front axle mounting or vehicle frame (10) and which is provided with the control device (22) and with the transverse shafts (20, 21) under the front cover (12).

2. A motor vehicle according to claim 1 characterised in that the lift frame has at least one bearer (14) carrying the ends of the lower and upper links (16 and 18) which are towards the vehicle, and that the bearer or bearers (14) are disposed within the front cover (12).

3. A motor vehicle according to claim 2 characterized in that a separate bearer (14) is provided for each of the lower links (18), at least one of the separate bearers (14) having an abutment against which at least one of the links (16, 18) can be brought to bear in its position of maxium pivotal movement.

4. A motor vehicle according to one or more of the preceding claims characterised in that the transverse shafts (20, 21) of the links (16, 18) are arranged on plates (24) which are secured to the bearers (14) and which point rearwardly to a driving cabin.

5. A motor vehicle according to one or more of the preceding claims characterized in that the vehicle is provided with a control device (22) which is in the form of at least one lift cylinder, wherein the lift cylinder is arranged at one end on the vehicle frame (10) or the front axle mounting, and the lift cylinder or cylinders (control device 22) engage at the other end on the upper link or links (16).

6. A motor vehicle according to one or more of the preceding claims characterized in that the connecting location (23) of the lift cylinder or cylinders (control device 22), which is towards the frame, permits a vertical pivotal movement of the lift cylinder or cylinders and the connection which is towards the link or links has a transverse bar (50) mounted rotatably in the control device (22) or in the link or links (16, 18), wherein the transverse shafts (20, 21) of the links (16, 18) are arranged rearwardly of the transverse bar (50), with respect to an implement connecting member (30), possibly as far as a vertical plane above the front axle.

7. A motor vehicle according to one or more of the preceding claims characterized in that, with two upper links (16), said links are arranged in the same vertical plane as the associated lower links (18) and are passed through respective slots in the front cover (12).

8. A motor vehicle according to one or more of the preceding claims characterized in that, with two upper links (16), the transverse bar (50) of the control device (22) interconnects the two upper links (16) and is rotatably mounted in same.

9. A motor vehicle according to one or more of the preceding claims characterized in that the bearers (14) forming the lift frame are of a U-shaped profile in cross-section, with the open sides thereof facing towards each other, each accommodating a respective control device (22) therein and at their limbs which are the rearward limbs with respect to the control device, having the rearwardly extending plates (24) for carrying the transverse shafts (20, 21) of the links (16, 18).

## Revendications

1. Véhicule à moteur utilisable pour l'agriculture et/ou les travaux publics, en particulier tracteur agricole, avec un dispositif porte-outils frontal, qui comporte deux biellettes inférieures (18) et au moins une biellette supérieure (16), qui peuvent pivoter verticalement grâce à un dispositif de déplacement (22) et dont les extrémités situées du côté du véhicule sont placées sur des axes transversaux (20, 21), les axes transversaux (21) autour desquels les biellettes inférieures (18) peuvent pivoter, étant prévus au voisinage de l'essieu avant du véhicule à moteur et le véhicule à moteur pouvant comporter un châssis, caractérisé en ce que les axes transversaux (21) autour desquels les biellettes inférieures (18) peuvent pivoter, et l'axe transversal (20) autour duquel la ou les biellettes supérieures (16) peuvent pivoter sont placés sur un châssis élévateur disposé fixe sur le support d'essieu avant ou le châssis (10) du véhicule, qui est prévu avec le dispositif de déplacement (22) et avec les axes transversaux (20, 21) au-dessous du capotage frontal (12).

2. Véhicule à moteur suivant la revendication 1, caractérisé en ce que le châssis élévateur comporte au moins un support (14) recevant les extrémités côté véhicule des biellettes inférieures et de la biellette supérieure (16 et 18), et en ce que le ou les supports (14) sont prévus à l'intérieur du capotage frontal (12).

3. Véhicule à moteur suivant la revendication 2, caractérisé en ce qu'il est prévu pour chacune des biellettes inférieures (18) un support particulier (14), l'un au moins de ces supports comportant une butée avec laquelle l'une au moins des biellettes (16, 18) peut être amenée en contact dans sa position de pivotement maximale.

4. Véhicule à moteur suivant l'une ou plusieurs des revendications précédentes, caractérisé en ce que les axes transversaux (20, 21) des biellettes (16, 18) sont disposés sur des pattes de fixation (24) fixées aux supports (14), dirigés vers l'arrière en direction d'une cabine de conduite.

5. Véhicule à moteur suivant l'une ou plusieurs des revendications précédentes, caractérisé en ce que le véhicule comporte au moins un dispositif de déplacement (22) conformé en cylindre de levage, le cylindre de levage étant disposé à une extrémité sur le châssis de véhicule (10) ou sur le support d'essieu avant, le ou les cylindres de levage (dispositif de déplacement 22) attaquant à l'autre extrémité la ou les biellettes supérieures (16).

6. Véhicule à moteur suivant l'une ou plusieurs des revendications précédentes, caractérisé en ce que le point de raccordement côté châssis (23) du ou des cylindres de levage (dispositif de déplacement 22) permet un pivotement vertical de celui-ci ou de ceux-ci et le raccordement côté biellettes comporte une barre transversale (50) placée de façon à pouvoir tourner dans le dispositif de déplacement (22) ou dans la ou les biellettes (16, 18), les axes transversaux (20, 21) des biellettes (16, 18) étant disposés par rapport à un élément de raccordement d'outils (30) derrière la barre transversale (50) éventuellement jusque dans un plan vertical au-dessus de l'essieu avant.

7. Véhicule à moteur suivant l'une ou plusieurs des revendications précédentes, caractérisé en ce que, dans le cas de deux biellettes supérieures (16), celles-ci sont disposées dans le même plan vertical que les biellettes inférieures (18) correspondantes et passent chacune par des fentes pratiquées dans le capotage frontal (12).

8. Véhicule à moteur suivant l'une ou plusieurs des revendications précédentes, caractérisé en ce que, dans le cas de deux biellettes supérieures (16), la barre transversale (50) du dispositif de déplacement (22) relie l'une à l'autre les deux biellettes supérieures (16) et est monté à rotation dans celles-ci.

9. Véhicule à moteur suivant l'une ou plusieurs des revendications précédentes, caractérisé en ce que les supports (14) formant le châssis élévateur ont une section droite profilée en U dont les côtés ouverts sont dirigés l'un vers l'autre reçoivent chacun en leur intérieur un dispositif de déplacement (22) et comportent à leurs branches postérieures par rapport au dispositif de déplacement des pattes de fixation s'étendant vers l'arrière (24) pour la réception des axes transversaux (20, 21) des biellettes (16, 18).

FIG.1

FIG. 2

FIG. 3